# EUROPEAN PATENT APPLICATION

(11) **EP 4 834 787 A1**
(43) Date of publication of application: **04.11.2026**
(21) Application number: 25173009.9
(22) Date of filing: 28.04.2025
(51) Int. Cl.: B65D 5/74, B65D 55/16

(54) **CLOSING SYSTEM FOR A CONTAINER, ASSOCIATED CONTAINER AND ASSOCIATED SPOUT MOLD AND CAP MOLD**

(71) Applicant: Svalinn Cap Systems AG, 6300 Zug (CH)
(72) Inventor: KOMET, Israel, 6300 ZUG (CH); ODET, Philippe, 01190 BOZ (FR)
(74) Representative: Lavoix

(57) **Abstract**

The closing system (14) comprises a spout (20) and a cap (30), the spout having a base (22), a neck (24) and a support device (28), the cap having a support collar (42) cooperating with the support device to keep the cap attached to the spout, and a cap cover (32) with a skirt (34) and a locking tab (40) extending from the skirt. When the cap is in an open configuration, the cap cover is unscrewed from the neck and the locking tab abuts against the neck. To make the open configuration more stable, the neck of the spout comprises a roughened surface (50), against which the locking tab abuts and located between the support device and external threads of the spout, the roughened surface having a surface roughness parameter Ra of at least 4.50 µm, as defined by ISO 21920-2:2021 Standard.

## Description

### TECHNICAL FIELD

The present invention concerns a closing system for a container, the closing system comprising a spout and a cap. It also concerns a container equipped with such a closing system, a spout mold for manufacturing the spout of such closing system and a cap mold for manufacturing the cap of such closing system.

### BACKGROUND ART

It is known to manufacture containers, such as cardboard milk containers, having a closing system comprising a cap and a spout, in which the cap is held captive on the spout to facilitate recycling of the container and reduce pollution. To such end, in a known manner, the cap comprises a cap cover to close the closing system, which is attached to a support collar, mounted on a neck of the spout and held captive on the spout. For example, the support collar is held captive between a base of the spout and a support ring formed on the neck of the spout. This support collar is movable in rotation relative to the spout in order to be able to screw and unscrew the cap cover from the spout. The cap cover is attached to the support collar with an articulation device, generally including a hinge, thus allowing the cap cover to be unscrewed from the spout and flipped up while being attached to the spout via the support collar.

A common issue with this type of closing system is keeping the cap cover fully open to prevent the cap cover from interfering with pouring from the container.

To solve this issue, it is known to add a locking tab on the cap, which abuts against the spout when the cap is opened. However, when the locking tab is only in abutment against the neck of the spout, the locking tab tends to slip, so that the cap is not reliably kept open and might partly close.

To avoid this drawback, WO 2020/251984 discloses adding a ring-shaped portion on the neck of the spout, located between the support ring and threads of the spout. When the cap is open, a locking tab of the cap is in abutment against a top surface of said ring-shaped portion, to keep the cap stable when fully opened. This solution is generally satisfactory, but has the disadvantage of making the spout heavier and therefore more expensive, as the ring-shaped portion adds material to the spout.

There is therefore a need for a closing system that is lighter while ensuring the cap is reliably kept in its fully open position.

### SUMMARY OF THE INVENTION

According to one aspect, the invention relates to a closing system for a container, the closing system including a spout and a cap.
The spout comprises:
- a base, configured for fixing the closing system onto a reservoir of the container, and
- a neck, extending from the base along a spout axis,
- external threads, formed on the neck, and
- a support device, formed on the neck.
The cap comprises:
- a cap cover, having a skirt extending along a cap axis, internal threads formed on the skirt and a locking tab extending from the skirt,
- a support collar, at least partially located between the base and the support device so as to be held captive on the spout,
- an articulation device, attaching the cap cover to the support collar while allowing translation of the cap cover relative to the support collar along the cap axis and rotation of the cap cover relative to the support collar about a hinge axis orthogonal to the cap axis,
and the cap is switchable between:
- a closed configuration, in which the cap cover is screwed onto the neck, the cap axis being coincident with the spout axis, thus preventing pouring from the container, and in which the locking tab is not in contact with the spout,
- an open configuration, in which the cap cover is unscrewed from the neck and in which the cap axis intersects the spout axis, thus allowing pouring from the container.
According to the invention, the neck of the spout comprises a roughened surface located between the support device and the external threads, along the spout axis, the locking tab being in abutment against the roughened surface of the neck in the open configuration of the cap, and the roughened surface of the neck has a surface roughness parameter Ra of at least 4.50 µm, as defined by ISO 21920-2:2021 Standard.

Thanks to the invention, the cap is securely held in its open configuration, due to the friction between its locking tab and the roughened surface of the neck. The surface roughness parameter Ra of the roughened surface of the neck ensures that said friction is sufficient to avoid any slippage between the locking tab and the neck of the spout. Hence, as the locking tab is directly in abutment against the neck of the spout, there is no need for an additional ring-shaped portion to secure the open position of the cap, nor any additional means to support the locking tab. Therefore, the closing system is lighter and cheaper to manufacture, in particular because increasing the roughness of the neck does not increase the cost of the spout.

For comparison purposes, the neck of known spouts usually have a surface roughness parameter Ra generally equal to 1.10 µm, thus allowing the locking tab to slip against the neck.

According to advantageous but non-mandatory aspects of the invention, such closing system may incorporate one or more of the following features taken alone or in any technically permissible combination:
- The locking tab comprises a roughened surface, the roughened surface of the locking tab being in abutment against the roughened surface of the neck in the open configuration of the cap, and the roughened surface of the locking tab has a surface roughness parameter Ra of at least 4.50 µm, as defined by ISO 21920-2:2021 Standard.
- The surface roughness parameter Ra of the roughened surface of the locking tab is independent of an orientation of an evaluation length along which the surface roughness parameter Ra of the roughened surface of the locking tab is determined.
- The surface roughness parameter Ra of the roughened surface of the neck is independent of an orientation of an evaluation length along which the surface roughness parameter Ra of the roughened surface of the neck is determined.
- The surface roughness parameter Ra of the roughened surface of the neck is determined along an evaluation length extending in a plane perpendicular to the spout axis.
- An angle between the cap axis and a normal to the roughened surface of the locking tab is comprised between 45° and 90°, preferably equal to 70°.
- The roughened surface of the locking tab is concave.
- The neck of the spout is cylindrical and a radius of curvature of the roughened surface of the locking tab, measured in a plane perpendicular to the cap axis, is equal to a radius of the neck, measured in a plane perpendicular to the spout axis, to within plus or minus 10%.
- The articulation device comprises two flexible arms, each flexible arm having a first extremity attached to the support collar and a second extremity attached to the cap cover; the articulation device comprises a bridge connecting the second extremities of the two flexible arms; the locking tab extends from the skirt towards the bridge; the locking tab is not in contact with the bridge in the open configuration of the cap; and the closing system is configured so that, during switching of the cap from its closed configuration to its open configuration, the roughened surface of the locking tab comes in contact against the bridge of the articulation device and rubs against the bridge.
- The spout is manufactured by injection molding in a spout mold and the cap is manufactured by injection molding in a cap mold.

According to another aspect, the invention also relates to a container comprising a reservoir and a closing system, the closing system being as described here above, the base of the spout of the closing system being attached to the reservoir.

According to another aspect, the invention also relates to a spout mold, for manufacturing a spout of a closing system as described here above, the spout mold comprising a roughened surface, configured to form the roughened surface of the neck of the spout during injection molding of the spout, the roughened surface of the spout mold having a surface roughness parameter Ra of at least 6.30 µm, as defined by ISO 21920-2:2021 Standard.

Advantageously, the roughened surface of the spout mold is manufactured by electrical discharge machining.

According to another aspect, the invention also relates to a cap mold, for manufacturing a cap of a closing system as described here above, the cap mold comprising a roughened surface, configured to form the roughened surface of the locking tab of the cap during injection molding of the cap, the roughened surface of the cap mold having a surface roughness parameter Ra of at least 6.30 µm, as defined by ISO 21920-2:2021 Standard.

Advantageously, the roughened surface of the cap mold is manufactured by electrical discharge machining.

### BRIEF DESCRIPTION OF THE DRAWINGS

The invention will be better understood and other advantages thereof will appear more clearly upon reading the following description provided solely as an example and made in reference to the appended drawings, in which:
[Fig. 1] Figure 1 regroups a perspective view of a container according to the invention, and an enlarged view of a detail of the container, the container comprising a closing system according to an embodiment of the invention, the closing system being is a closed configuration.
[Fig. 2] Figure 2 is a side view of the closing system of Figure 1, the closing system being in an open configuration.
[Fig. 3] Figure 3 regroups a sectional view of the closing system of Figures 1 and 2, along the plane III of Figure 1, and an enlarged view of a detail of the closing system, the closing system being in the open configuration.
[Fig. 4] Figure 4 is an enlarged bottom view of a portion of the closing system of Figures 1 to 3, only a cap cover of a cap of the closing system being shown.
[Fig. 5] Figure 5 is a sectional view of the closing system of Figures 1 to 3, along the plane V-V of Figure 2, the closing system being in the open configuration.
[Fig. 6] Figure 6 is a view of a slider of a spout mold used to manufacture a spout of the closing system of Figures 1 to 3, the spout mold being according to the invention.
[Fig. 7] Figure 7 is a photograph of a detail of an exemplary slider of a spout mold.
[Fig. 8] Figure 8 regroups a view of a slider of a cap mold used to manufacture the cap of the closing system of Figures 1 to 3, and an enlarged view of said slider, the cap mold being according to the invention.

### DETAILED DESCRITPION OF SOME EMBODIMENTS

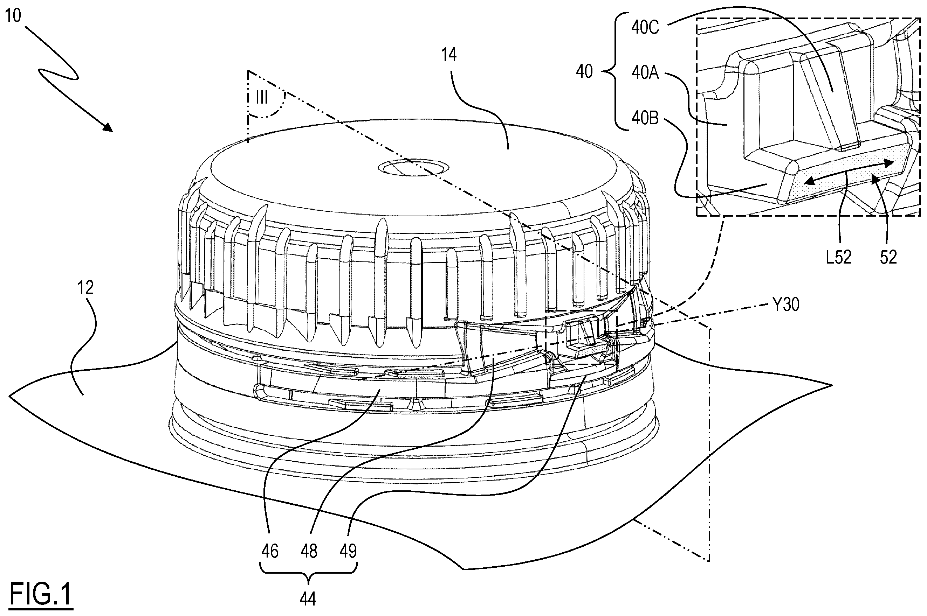

An exemplary container 10 is shown in Figure 1. The container 10 comprises a reservoir 12, such as a cardboard box, named "carton", or a bottle, only partly and schematically represented. The reservoir 12, known per se, is not described in greater details.

The container 10 comprises a closing system 14 for closing the reservoir 12.

The closing system 14 comprises a spout 20. The spout 20 comprises a base 22, with which the spout 20 is fixed onto the reservoir 12, for example by gluing or by ultrasonic welding. The spout 20 comprises a neck 24, extending from the base 22 along a spout axis X20. In particular, the neck 24 is cylindrical. In the example, an outer surface 24A of the neck 24 is cylindrical while an inner surface 24B of the neck 24 is slightly conical.

The spout 20 comprises external threads 26, formed on the neck 24, and a support device 28, formed on the neck and located between the threads 26 and the base 22, along the spout axis X20. The threads 26 extend from the outer surface 24A of the neck 24 radially outwards. The support device 28 extends from the outer surface 24A of the neck 24 radially outwards. In the example, the support device 28 is a support ring, extending along the full circumference of the neck 24.

The closing system 14 comprises a cap 30. The cap 30 comprises a cap cover 32, having a skirt 34 and a top 36. The skirt 34 extends from the top 36 along a cap axis X30. The cap cover 32 also comprises internal threads 38 formed on the skirt 34, more precisely inside of the skirt, and a locking tab 40 extending from the skirt 34.

The cap 30 comprises a support collar 42, which is at least partially located between the base 22 of the spout 20 and the support device 28 of the spout 20 so as to be held captive on the spout 20. In a known manner, the support collar 42 engages with the support device 28 to prevent the cap 30 to be removed from the spout 20.

The cap 30 comprises an articulation device 44, attaching the cap cover 32 to the support collar 42 while allowing translation of the cap cover 32 relative to the support collar 42 along the cap axis X30 and rotation of the cap cover 32 relative to the support collar 42 about a hinge axis Y30 orthogonal to the cap axis X30. In the example, the articulation device 44 comprises two flexible arms 46 and hinges 48. The hinges 48 allow easy rotation of the cap cover 32 relative to the support collar 42 about the hinge axis Y30, while the two flexible arms 46 allow the hinges 48 and the cap cover 32 to move relative to the support collar 42 along the cap axis X30, by bending. As an alternative, not shown, the articulation device 44 comprises only two flexible arms, which are able to twist to allow the cap cover 32 to rotate about the hinge axis Y30.

Advantageously, and as visible on Figure 1, the two flexible arms 46 of the articulation device 44 are also connected by a bridge 49. More precisely, each flexible arm 46 comprises a first extremity attached to the support collar 42 and a second extremity, the bridge 49 connecting the second extremities of the two flexible arms 46. The second extremity of the two flexible arms 46 is attached to the cap cover 32, in the example via the respective hinges 48. Furthermore, the locking tab 40 extends from the skirt 34 towards the bridge 49.

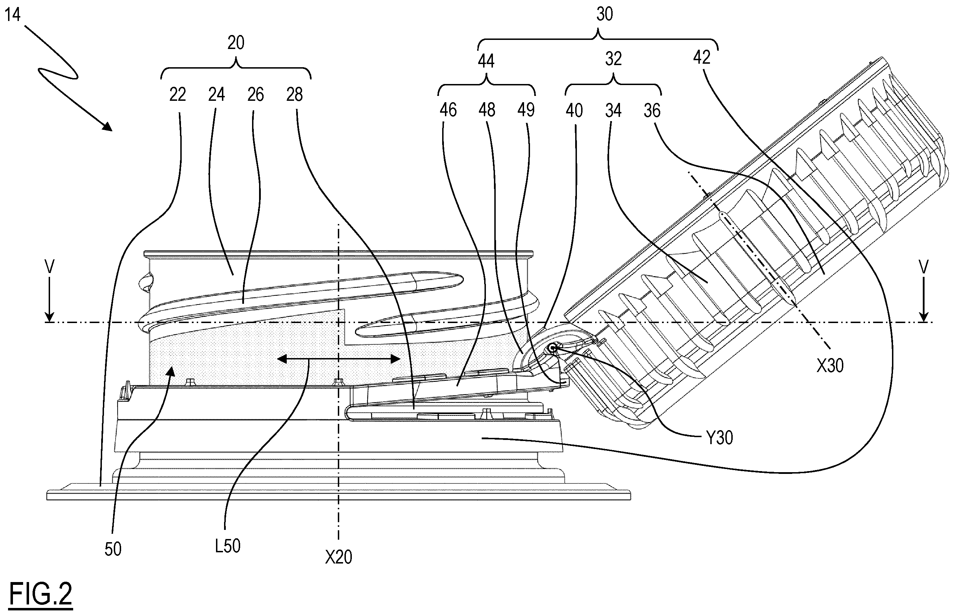

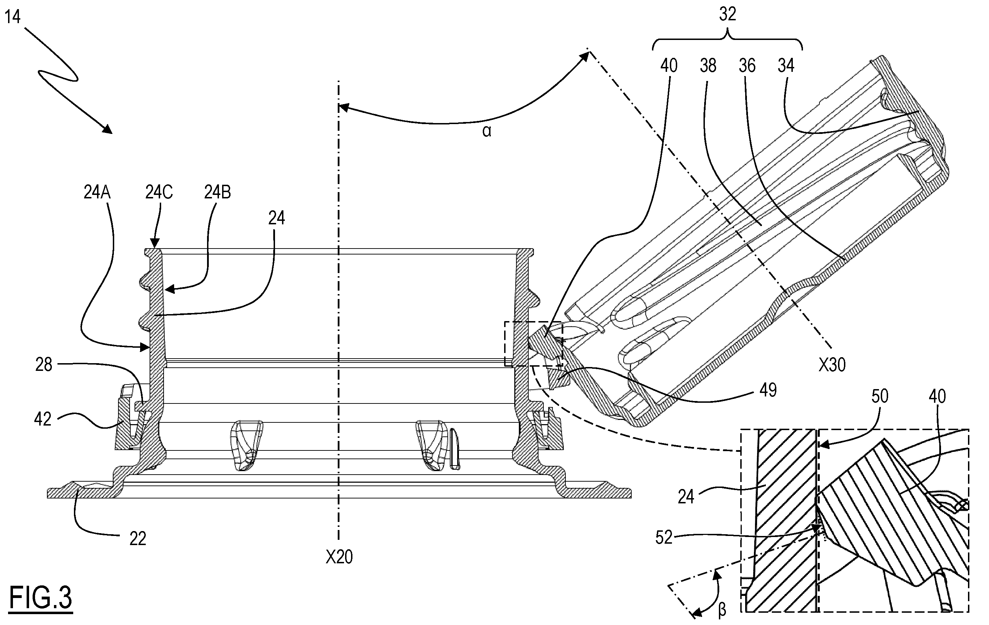

The cap 30 is switchable between a closed configuration, shown in Figure 1, and an opened configuration, shown in Figures 2 and 3.

In the closed configuration of the cap 30, the cap cover 32 is screwed onto the neck 24 of the spout 20, the cap axis X30 being coincident with the spout axis X20, thus preventing pouring from the container 10. Furthermore, in the closed configuration of the cap 30, the locking tab 40 is not in contact with the spout 20.

In the open configuration of the cap 30, the cap cover 32 is unscrewed from the neck 24 of the spout 20, and the cap axis X30 intersects the spout axis X20 so that an opening angle α measured between the spout axis and the cap axis is comprised between 30° and 90°, preferably equal to 50°. In other words, in the open configuration, the cap cover 32 does not close the spout, thus allowing pouring from the container 10.

Furthermore and as visible on Figure 3, in the open configuration of the cap 30, the locking tab 40 is in abutment against the neck 24 of the spout 20, thus allowing the cap 30 to be kept in its open configuration in a stable manner. In other words, the abutment of the locking tab 40 against the neck 24 prevents the cap cover 32 to spontaneously rotate about the hinge axis Y30 towards the neck 24 of the spout 20: on the contrary, the abutment of the locking tab 40 against the neck 24 ensures that the opening angle α is maintained, even if the container 10 is moved or placed upside down, thus ensuring that the cap cover 32 does not impede flow of liquid from the reservoir 12.

To switch the cap 30 from its closed configuration to its open configuration, a user of the container 10 starts by unscrewing the cap cover 32 from the neck 24 until the internal threads 38 of the skirt 34 disengage from the external threads 26 of the neck 24, thus moving the cap cover 32 away from the support collar 42 along the cap axis X30, then tilts the cap cover 32 about the hinge axis Y30 so that the cap cover 32 is moved away from the spout 20, until the position shown in Figures 2 and 3 is reached. During tilting of the cap cover 32 about the hinge axis Y30, the locking tab 40 rubs against the neck 24 of the spout 20 and the user has to cross a hard point before reaching the open configuration of the cap.

To prevent the locking tab 40 from slipping against the neck 24 of the spout 20 when the cap 30 is in its open configuration, the neck 24 of the spout 20 comprises a roughened surface 50, located between the support device 28 and the external threads 26 along the spout axis X20, and against which the locking tab 40 is in abutment in the open configuration of the cap 30.

In Figure 2, the roughened surface 50 is represented by a dotted area. In the enlarged view of Figure 3, the roughened surface 50 is represented by a dotted line.

In the example, the roughened surface 50 extends along the spout axis X20 between the support device 28 and the external threads 26 of the spout 20, and does not extend at the external threads 26 along the spout axis X20. In other words, in the example, the roughened surface 50 stops right before the external threads 26, along the spout axis X20.

As an alternative, not shown, the roughened surface 50 of the neck 24 extends from the support device 28 to an extremity 24C of the neck 24 along the spout axis X20. In other words, in such alternative, the roughened surface 50 also extends between the external threads 26, so that the surface roughness of the neck 24 is uniform. Regardless of the disposition of the roughened surface 50, the external threads 26 are preferably non-roughened, to ensure smooth screwing of the cap cover 32 on the spout 20.

The roughened surface 50 of the neck 24 has a surface roughness parameter Ra of at least 4.50 µm, as defined by ISO 21920-2:2021 Standard. Preferably, the surface roughness parameter Ra of the roughened surface 50 is comprised between 4.50 µm and 12.5 µm, more preferably between 4.50 µm and 6.50 µm, most preferably equal to 4.50 µm.

In the following description, the ISO 21920-2:2021 Standard refers to the first edition of the ISO 21920-2:2021 International Standard, as published on December 2021. The text of the ISO 21920-2:2021 Standard was also approved by the European Committee for Standardization as a European Standard under reference EN ISO 21920-2:2022, without any modification.

The surface roughness parameter Ra is designated by paragraph 4.2.2 of ISO 21920-2:2021 as "the arithmetical mean height parameter" and defined as "the arithmetical mean of the absolute ordinate values", also defined as "the arithmetic mean of absolute deviations from the mean line". In other words, the surface roughness parameter Ra represents the average of the absolute values of the profile heights over a given evaluation length. More precisely, the surface roughness parameter Ra is calculated along an evaluation length using the following formula: ${R}_{a} = \frac{1}{{l}_{e}} {\int }_{0}^{{l}_{e}} \left|z\left(x\right)\right| dx$ with lₑ the evaluation length, extending along an x axis; and |z(x)| the absolute value of the height of the surface profile at the coordinate x, i.e. the absolute value of the distance between the surface profile at the coordinate x and the mean height of the profile.

Furthermore, ISO 21920-3:2021 gives more details about the measurement conditions of the surface roughness parameter Ra.

In the example, the surface roughness parameter Ra of the roughened surface 50 of the neck 24 of the spout 20 is measured along an evaluation length L50 that extends along the circumference of the neck 24, i.e. in a plane perpendicular to the spout axis X20. For example, the evaluation length L50 measures between 3 mm and 6 mm, or between 5% and 10% of the circumference of the neck 24.

Having the roughened surface 50 on the neck 24 of the spout 20 is particularly advantageous to ensure the cap 30 is kept in its open configuration in a stable manner. In other words, thanks to the roughened surface 50, the open configuration of the cap 30 is stable. Indeed, having the surface roughness parameter Ra of the roughened surface 50 being at least 4.50 µm ensures that the friction between the locking tab 40 and the neck 24 is sufficient to avoid any slippage between the locking tab 40 and the neck 24. Hence, the cap cover 32 is prevented from rotating about the hinge axis Y30 towards the spout 20 and the cap 30 is locked in its open position.

To further improve the locking of the position of the cap cover 32 in the open configuration of the cap 30, the locking tab 40 also comprises a roughened surface 52. The roughened surface 52 of the locking tab 40 is in abutment against the roughened surface 50 of the neck 24 in the open configuration of the cap 30. Furthermore, the roughened surface 52 of the locking tab 40 has a surface roughness parameter Ra of at least 4.50 µm, as defined by ISO 21920-2:2021 Standard. In other words, in the example, the roughened surface 50 on the neck 24 of the spout 20 and the roughened surface 52 of the locking tab 40 have the same surface roughness parameter Ra.

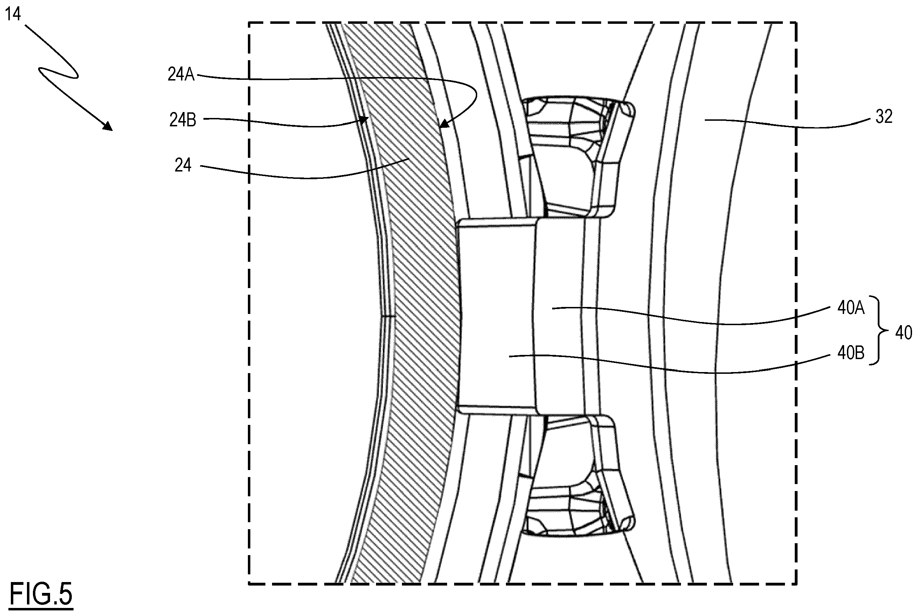

In Figures 1 and 5, the roughened surface 52 of the locking tab 40 is represented by a dotted area. In the enlarged view of Figure 3, the roughened surface 52 of the locking tab 40 is represented by a dotted line.

In the example, the surface roughness parameter Ra of the roughened surface 52 of the locking tab 40 is measured along an evaluation length L52 that extends in a plane perpendicular to the cap axis X30. For example, the evaluation length L52 measures between 1 mm and 2.5 mm, or between 50% and 100% of the length of the roughened surface 52, measured in a plane perpendicular to the cap axis X30.

Therefore, when the cap 30 is in its open configuration, the roughened surface 52 of the locking tab 40 is in abutment against the roughened surface 50 of the neck 24: as the contact between the locking tab 40 and the neck 24 is made with two roughened surfaces, the locking of the position of the cap cover 32 is strengthen and the risk of accidental rotation of the cap cover 32 towards the spout 20 is reduced.

Advantageously, to further increase friction between the locking tab 40 and the neck 24 when the cap 30 is in its open configuration, the roughened surface 52 of the locking tab 40 is concave. In other words, contrary to known locking tab, the locking tab 40 is not flat, but rounded to match the shape of the neck 24.

Hence, in the example, a radius of curvature of the roughened surface 52 of the locking tab 40, measured in a plane perpendicular to the cap axis X30, is equal to a radius of the neck 24, more precisely to a radius of the outer surface 24A of the neck 24, measured in a plane perpendicular to the spout axis X20, to within plus or minus 10%.

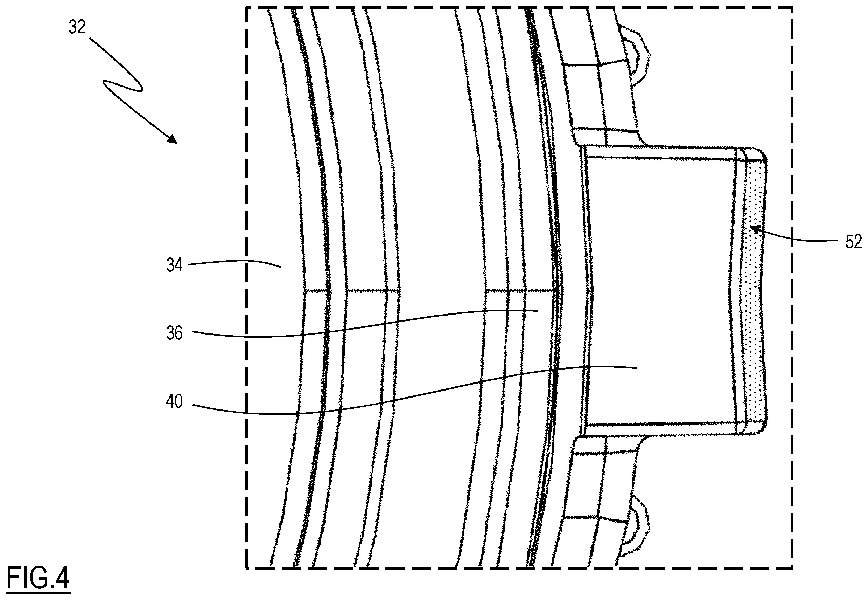

The fact that the roughened surface 52 of the locking tab 40 is concave is particularly visible on Figure 4. Figure 4 being a simplified representation of the cap cover 32, the concavity of the roughened surface 52 is approximate, the contours of the roughened surface 52 being shown as two approximatively-straight lines.

The fact that the roughened surface 52 of the locking tab 40 is rounded to match the shape of the neck 24 is particularly visible on Figure 5.

Advantageously, and as visible on Figures 3 and 4, the roughened surface 52 of the locking tab 40 does not extend parallel to the cap axis X30, but extends oblique relative to the cap axis X30. Preferably, an angle β between the cap axis X30 and a normal to the roughened surface 52 of the locking tab 40 is comprised between 45° and 90°, more preferably equal to 70°.

In the example, the locking tab 40 is "L" shaped, with a first portion 40A extending axially from the skirt 34, parallel to the cap axis X30, and a second portion 40B extending radially outwards from the first portion 40A, perpendicular to the cap axis X30. The roughened surface 50 of the locking tab 40 is formed by a free extremity of the second portion 40B. The "L" shape of the locking tab 40 is particularly advantageous to increase the opening angle α. Indeed, the roughened surface 52 is further away from the cap axis X30 thanks to this "L" shape, thus allowing the cap 30 to open more than in known caps having a locking tab only extending axially downwards from the skirt of the cap. In the example, the first portion 40A of the locking tab 40 extends from the skirt 34 parallel to the cap axis X30 towards the bridge 49.

In addition, in the example, the locking tab 40 further comprises a reinforcement rib 40C, extending radially outwards from the first portion 40A, perpendicular to the cap axis X30, increasing the stiffness of the locking tab 40 and in particular of the second portion 40B. In particular, the reinforcement rib 40C ensures that, when the cap 30 is in its open configuration, the locking tab 40 is reliably kept in abutment against the spout 20, by avoiding elastic deformation of the locking tab 40.

Preferably, during switching of the cap 30 from its closed configuration to its open configuration, the roughened surface 52 of the locking tab 40 comes in contact against the bridge 49 of the articulation device 44, and rubs against the bridge 49, so that the user has to cross a hard point before the roughened surface 52 comes close to the neck 24. Practically speaking, this hard point will cause the bridge 49 to deform to allow the movement of the locking tab 40. Advantageously, this contact between the roughened surface 52 of the locking tab 40 and the bridge 49, and the resulting hard point that needs to be overcome to approach the open position of the cap 30, causes an audible sound, such as a click, which is perceived by the user as a reliable indication of the good opening of the cap 30. In practice, this sound is occurring when the locking tab 40 stops from rubbing against the bridge 49 so that the bridge 49 deforms back to its resting position by elastic return. Hence, when the cap 30 is in its open position, the locking tab 40 is not in contact with the bridge 49. However, when the cap 30 is in its open position, the skirt 34 may be resting in abutment against the bridge 49, as visible on Figures 2 and 3.

Advantageously, the surface roughness parameter Ra of the roughened surface 50 of the neck 24 is independent of an orientation of the evaluation length L50 along which the surface roughness parameter Ra of the roughened surface 50 of the neck 24 is determined. In other words, would the evaluation length L50 extend parallel to the spout axis X20, the surface roughness parameter Ra would still be of at least 4.50 µm. Hence, the roughness of the roughened surface 50 is not direction-dependent.

Similarly, the surface roughness parameter Ra of the roughened surface 52 of the locking tab 40 is independent of an orientation of the evaluation length L52 along which the surface roughness parameter Ra of the roughened surface 52 of the locking tab 40 is determined. In other words, would the evaluation length L52 extend parallel to the cap axis X30, the surface roughness parameter Ra would still be of at least 4.50 µm. Hence, the roughness of the roughened surface 52 is not direction-dependent.

In other words, the areal surface texture of the roughened surfaces 50 and 52 is preferably non-directional. For example, the texture of the roughened surfaces 50 and 52 is particulate, or granular.

Advantageously, the spout 20 is manufactured by injection molding in a spout mold and the cap 30 is manufactured by injection molding in a cap mold.

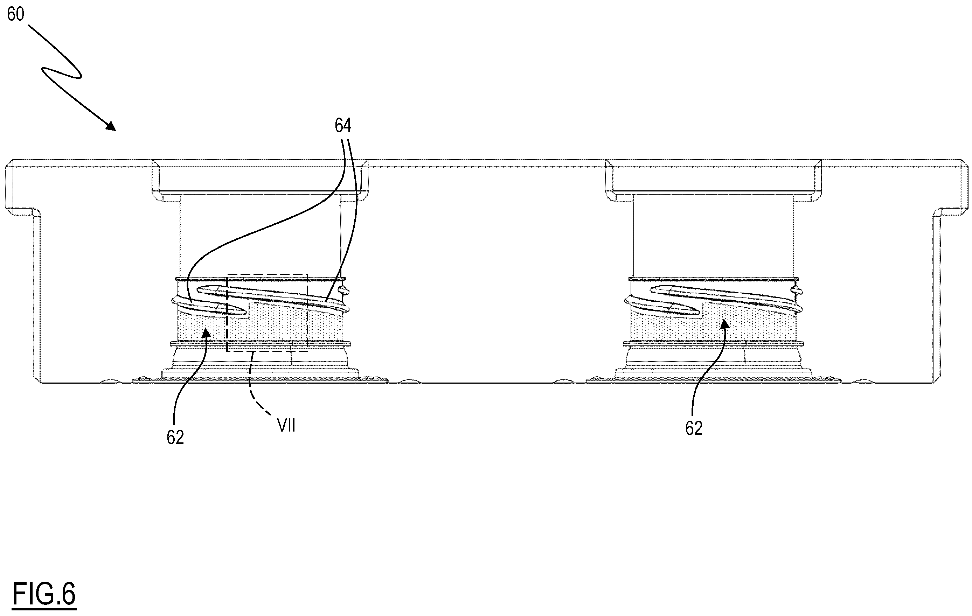

In a known manner, a spout mold generally comprises a core and sliders surrounding said core. The sliders and the core form between them a free space, which form the volume of the spout and allow injection molding of the spout. In the example, the spout 20 is manufactured using a spout mold comprising two sliders, each forming a half-shell surrounding the core. Figure 6 shows one of these two sliders, noted 60. Furthermore, in the example of Figure 6, the slider 60 is used to manufacture two spouts simultaneously.

As visible on Figure 6, the slider 60 comprises a roughened surface 62 configured to form the roughened surface 50 of the neck 24 of the spout 20 during injection molding of the spout. In other words, during injection molding of the spout 20, the roughened surface 62 of the slider 60 delimits the roughened surface 50 of the spout.

Also visible on the slider 60 are surfaces 64 which are intended to form the external threads 26 of the spout 20.

In the example, since the spout mold comprises two sliders, the slider 60 only delimits one portion of the roughened surface 50 of the spout 20, and the other slider also comprises a roughened surface delimiting the other portion of the roughened surface 50 of the spout.

In addition, the roughened surface 62 of the slider 60 has a surface roughness parameter Ra of at least 6.30 µm, as defined by ISO 21920-2:2021 Standard. In a particularly advantageous manner, the surface roughness parameter Ra of the roughened surface 62 of the slider 60 is greater than the surface roughness parameter Ra of the roughened surface 50 of the spout 20. Indeed, during injection molding of the spout 20, the injected material is not sufficiently fluid to penetrate fully to the bottom of the asperities of the roughened surface 62 of the slider 60, so that the surface roughness parameter Ra of surface 50 of the spout 20 is necessarily lower than that of the roughened surface 62 of the slider 60. Having the surface roughness parameter Ra of the roughened surface 62 of the slider 60 to be at least 6.30 µm allows ensuring the surface roughness parameter Ra of the roughened surface 50 of the spout 20 is at least 4.50 µm.

Preferably, the roughened surface 62 of the slider 60 is manufactured by electrical discharge machining, allowing to easily obtain the surface roughness parameter Ra of at least 6.30 µm. As an alternative, not shown, the roughened surface 62 is manufactured by chemical erosion, the other surfaces of the slider 60 being masked so as not be roughened.

Other designs are known for obtaining a spout mold, with one or more sliders, or other conceptions. Regardless of the design of the spout mold, according to the invention, the spout mold comprises a roughened surface 62, configured to form the roughened surface 50 of the neck 24 of the spout 20 during injection molding of the spout 20, the roughened surface of the spout mold having a surface roughness parameter Ra of at least 6.30 µm, as defined by ISO 21920-2:2021 Standard.

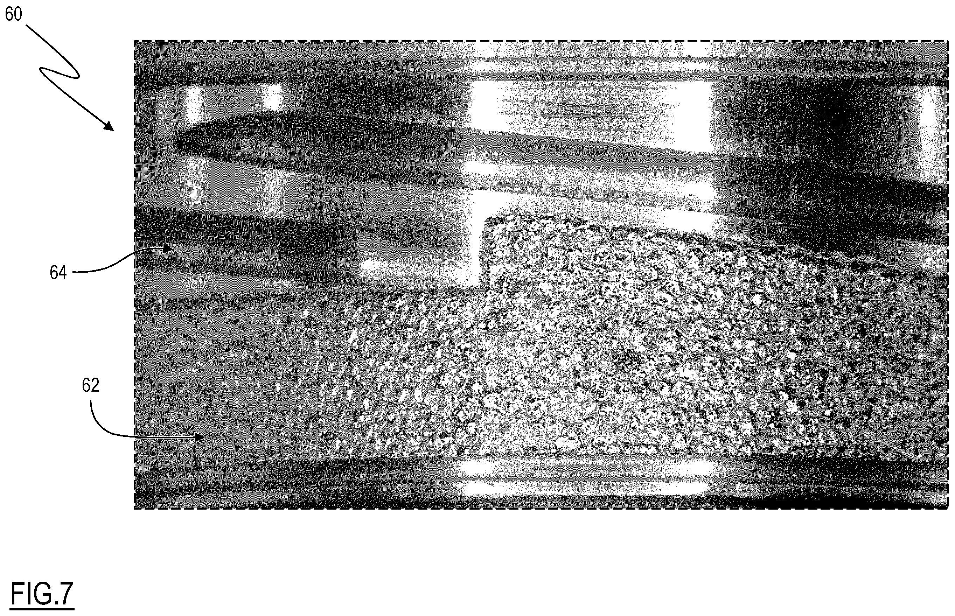

In the photograph of Figure 7, a close-up view of an exemplary slider 60 of a spout mold is shown, with its roughened surface 62 particularly distinguishable. The surfaces 64 intended to form the external threads 26 of the spout 20 are also visible on Figure 7. In particular, the roughened surface 62 appears rougher than the other surfaces of the spout mold, such as the surfaces 64 intended to form the external threads 26. For example, the surfaces of the spout mold other than the roughened surface 62, such as the surfaces 64, have a surface roughness parameter Ra of at most 1.10 µm, as defined by ISO 21920-2:2021 Standard.

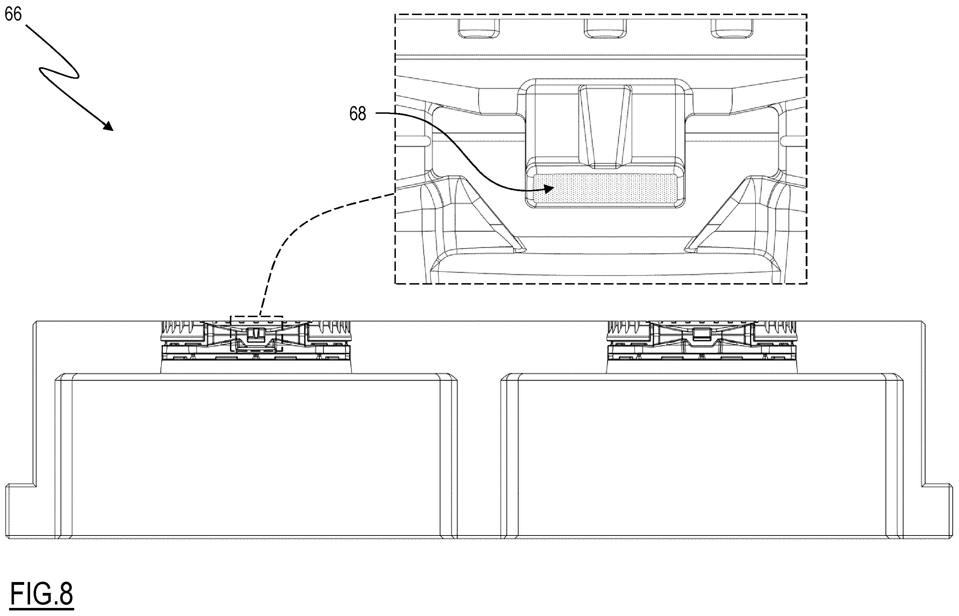

Similarly, a cap mold generally comprises a core and sliders. In the example, the cap 30 is manufactured using a cap mold comprising three sliders, with two sliders each forming a half-shell surrounding the lower part of the core and the third slider forming a cover surrounding the upper part of the core. Figure 8 shows one of the two sliders used to surround the lower part of the core, noted 66. Furthermore, in the example of Figure 8, the slider 66 is used to manufacture two caps simultaneously.

As visible on Figure 8, the slider 66 comprises a roughened surface 68 configured to form the roughened surface 52 of the locking tab 40 of the cap 30 during injection molding of the cap. In other words, during injection molding of the cap 30, the roughened surface 68 of the slider 66 delimits the roughened surface 52 of the cap 30.

In the example, and as visible on Figure 8, the roughened surface 52 of the locking tab 40 of the cap 30 is entirely formed by the slider 66, so that the other sliders do not have roughened surfaces.

In addition, the roughened surface 68 of the slider 66 has a surface roughness parameter Ra of at least 6.30 µm, as defined by ISO 21920-2:2021 Standard. In a particularly advantageous manner, the surface roughness parameter Ra of the roughened surface 68 of the slider 66 is greater than the surface roughness parameter Ra of the roughened surface 52 of the locking tab 40 of the cap 30. Indeed, during injection molding of the cap 20, the injected material is not sufficiently fluid to penetrate fully to the bottom of the asperities of the roughened surface 68 of the slider 66, so that the surface roughness parameter Ra of surface 52 of the locking tab 40 is necessarily lower than that of the roughened surface 68 of the slider 66. Having the surface roughness parameter Ra of the roughened surface 68 of the slider 66 to be at least 6.30 µm allows ensuring the surface roughness parameter Ra of the roughened surface 52 of the locking tab 40 is at least 4.50 µm.

Preferably, the surfaces of the cap mold other than the roughened surface 68 have a surface roughness parameter Ra of at most 1.10 µm, as defined by ISO 21920-2:2021 Standard.

Preferably, the roughened surface 68 of the slider 66 is manufactured by electrical discharge machining, allowing to easily obtain the surface roughness parameter Ra of at least 6.30 µm. As an alternative, not shown, the roughened surface 68 is manufactured by chemical erosion, the other surfaces of the slider 66 being masked so as not be roughened.

Other designs are known for obtaining a cap mold, with one or more sliders, or other conceptions. Regardless of the design of the cap mold, according to the invention, the cap mold comprises a roughened surface 68, configured to form the roughened surface 52 of the locking tab 40 of the cap 30 during injection molding of the cap 30, the roughened surface of the cap mold having a surface roughness parameter Ra of at least 6.30 µm, as defined by ISO 21920-2:2021 Standard.

A surface roughness parameter Ra of 4.50 µm, corresponding to the surface roughness parameter Ra of the roughened surfaces 50 and 52, is equivalent to a Charmilles surface finish of 33, the Charmilles surface finish being a widely used metric in the field of electric discharge machining. A surface roughness parameter Ra of 6.30 µm, corresponding to the surface roughness parameter Ra of the roughened surfaces 62 and 68, is equivalent to a Charmilles surface finish of 36.

The features of the embodiments and variants considered in this description can be combined to generate new embodiments of the invention, within the scope of the claims.

## Claims

1. Closing system (14), for a container (10), the closing system (14) including a spout (20) and a cap (30),
wherein the spout (20) comprises:
- a base (22), configured for fixing the closing system (14) onto a reservoir (12) of the container (10), and
- a neck (24), extending from the base (22) along a spout axis (X20),
- external threads (26), formed on the neck (24), and
- a support device (28), formed on the neck (24)
wherein the cap (30) comprises:
- a cap cover (32), having a skirt (34) extending along a cap axis (X30), internal threads (38) formed on the skirt (34) and a locking tab (40) extending from the skirt,
- a support collar (42), at least partially located between the base (22) and the support device (28) so as to be held captive on the spout (20),
- an articulation device (44), attaching the cap cover (32) to the support collar (42) while allowing translation of the cap cover (32) relative to the support collar (42) along the cap axis (X30) and rotation of the cap cover (32) relative to the support collar (42) about a hinge axis (Y30) orthogonal to the cap axis (X30),
wherein the cap (30) is switchable between:
- a closed configuration, in which the cap cover (32) is screwed onto the neck (24), the cap axis (X30) being coincident with the spout axis (X20), thus preventing pouring from the container (10), and in which the locking tab (40) is not in contact with the spout (20),
- an open configuration, in which the cap cover (32) is unscrewed from the neck (24) and in which the cap axis (X30) intersects the spout axis (X20), thus allowing pouring from the container (10),
**characterized in that** the neck (24) of the spout (20) comprises a roughened surface (50) located between the support device (28) and the external threads (26), along the spout axis (X20), the locking tab (40) being in abutment against the roughened surface (50) of the neck (24) in the open configuration of the cap (30),
and **in that** the roughened surface (50) of the neck (24) has a surface roughness parameter Ra of at least 4.50 µm, as defined by ISO 21920-2:2021 Standard.

2. Closing system (14) according to claim 1, wherein the locking tab (40) comprises a roughened surface (52), the roughened surface (52) of the locking tab (40) being in abutment against the roughened surface (50) of the neck (24) in the open configuration of the cap (30), and wherein the roughened surface (52) of the locking tab (40) has a surface roughness parameter Ra of at least 4.50 µm, as defined by ISO 21920-2:2021 Standard.

3. Closing system (14) according to claim 2, wherein the surface roughness parameter Ra of the roughened surface (52) of the locking tab (40) is independent of an orientation of an evaluation length (L52) along which the surface roughness parameter Ra of the roughened surface (52) of the locking tab (40) is determined.

4. Closing system (14) according to any one of claims 1-3, wherein the surface roughness parameter Ra of the roughened surface (50) of the neck (24) is independent of an orientation of an evaluation length (L50) along which the surface roughness parameter Ra of the roughened surface (50) of the neck (24) is determined.

5. Closing system (14) according to any one of claims 1-4, wherein the surface roughness parameter Ra of the roughened surface (50) of the neck (24) is determined along an evaluation length (L50) extending in a plane perpendicular to the spout axis (X20).

6. Closing system (14) according to any one of claims 1-5, wherein an angle (β) between the cap axis (X30) and a normal to the roughened surface (52) of the locking tab (40) is comprised between 45° and 90°, preferably equal to 70°.

7. Closing system (14) according to any one of claims 1-6, wherein the roughened surface (52) of the locking tab (40) is concave.

8. Closing system (14) according to claim 7, wherein the neck (24) of the spout (20) is cylindrical and wherein a radius of curvature of the roughened surface (52) of the locking tab (40), measured in a plane perpendicular to the cap axis (X30), is equal to a radius of the neck (24), measured in a plane perpendicular to the spout axis (X20), to within plus or minus 10%.

9. Closing system (14) according to any one of claims 1-8, wherein the articulation device (44) comprises two flexible arms (46), each flexible arm (46) having a first extremity attached to the support collar (42) and a second extremity attached to the cap cover (32), wherein the articulation device (44) comprises a bridge (49) connecting the second extremities of the two flexible arms (46), wherein the locking tab (40) extends from the skirt (34) towards the bridge (49), wherein the locking tab (40) is not in contact with the bridge (49) in the open configuration of the cap (30) and wherein the closing system (14) is configured so that, during switching of the cap (30) from its closed configuration to its open configuration, the roughened surface (52) of the locking tab (40) comes in contact against the bridge (49) of the articulation device (44) and rubs against the bridge (49).

10. Closing system (14) according to any one of claims 1-9, wherein the spout (20) is manufactured by injection molding in a spout mold and wherein the cap (30) is manufactured by injection molding in a cap mold.

11. Container (10) comprising a reservoir (12) and a closing system (14), the closing system (14) being according to any one of claims 1-10, the base (22) of the spout (20) of the closing system (14) being attached to the reservoir (12).

12. Spout mold, for manufacturing a spout (20) of a closing system (14) according to claim 10, wherein the spout mold comprises a roughened surface (62), configured to form the roughened surface (50) of the neck (24) of the spout (20) during injection molding of the spout (20), wherein the roughened surface (62) of the spout mold has a surface roughness parameter Ra of at least 6.30 µm, as defined by ISO 21920-2:2021 Standard.

13. Spout mold according to claim 12, wherein the roughened surface (62) of the spout mold is manufactured by electrical discharge machining.

14. Cap mold, for manufacturing a cap (30) of a closing system (14) according to claim 10, wherein the cap mold comprises a roughened surface (68), configured to form the roughened surface (52) of the locking tab (40) of the cap (30) during injection molding of the cap (30), wherein the roughened surface (68) of the cap mold has a surface roughness parameter Ra of at least 6.30 µm, as defined by ISO 21920-2:2021 Standard.

15. Cap mold according to claim 14, wherein the roughened surface (68) of the cap mold is manufactured by electrical discharge machining.

## Amended claims

### Amended claims in accordance with Rule 137(2) EPC.

1. Closing system (14), for a container (10), the closing system (14) including a spout (20) and a cap (30),
wherein the spout (20) comprises:
- a base (22), configured for fixing the closing system (14) onto a reservoir (12) of the container (10), and
- a neck (24), extending from the base (22) along a spout axis (X20),
- external threads (26), formed on the neck (24), and
- a support device (28), formed on the neck (24)
wherein the cap (30) comprises:
- a cap cover (32), having a skirt (34) extending along a cap axis (X30), internal threads (38) formed on the skirt (34) and a locking tab (40) extending from the skirt,
- a support collar (42), at least partially located between the base (22) and the support device (28) so as to be held captive on the spout (20),
- an articulation device (44), attaching the cap cover (32) to the support collar (42) while allowing translation of the cap cover (32) relative to the support collar (42) along the cap axis (X30) and rotation of the cap cover (32) relative to the support collar (42) about a hinge axis (Y30) orthogonal to the cap axis (X30),
wherein the cap (30) is switchable between:
- a closed configuration, in which the cap cover (32) is screwed onto the neck (24), the cap axis (X30) being coincident with the spout axis (X20), thus preventing pouring from the container (10), and in which the locking tab (40) is not in contact with the spout (20),
- an open configuration, in which the cap cover (32) is unscrewed from the neck (24) and in which the cap axis (X30) intersects the spout axis (X20), thus allowing pouring from the container (10),
**characterized in that** the neck (24) of the spout (20) comprises a roughened surface (50) located between the support device (28) and the external threads (26), along the spout axis (X20), the locking tab (40) being in abutment against the roughened surface (50) of the neck (24) in the open configuration of the cap (30),
and **in that** the roughened surface (50) of the neck (24) has a surface roughness parameter Ra of at least 4.50 µm, as defined by ISO 21920-2:2021 Standard.

2. Closing system (14) according to claim 1, wherein the surface roughness parameter Ra of the roughened surface (50) of the neck (24) is independent of an orientation of an evaluation length (L50) along which the surface roughness parameter Ra of the roughened surface (50) of the neck (24) is determined.

3. Closing system (14) according to any one of claims 1-2, wherein the surface roughness parameter Ra of the roughened surface (50) of the neck (24) is determined along an evaluation length (L50) extending in a plane perpendicular to the spout axis (X20).

4. Closing system (14) according to any one of claims 1-3, wherein the locking tab (40) comprises a roughened surface (52), the roughened surface (52) of the locking tab (40) being in abutment against the roughened surface (50) of the neck (24) in the open configuration of the cap (30), and wherein the roughened surface (52) of the locking tab (40) has a surface roughness parameter Ra of at least 4.50 µm, as defined by ISO 21920-2:2021 Standard.

5. Closing system (14) according to claim 4, wherein the surface roughness parameter Ra of the roughened surface (52) of the locking tab (40) is independent of an orientation of an evaluation length (L52) along which the surface roughness parameter Ra of the roughened surface (52) of the locking tab (40) is determined.

6. Closing system (14) according to any one of claims 4-5, wherein an angle (β) between the cap axis (X30) and a normal to the roughened surface (52) of the locking tab (40) is comprised between 45° and 90°, preferably equal to 70°.

7. Closing system (14) according to any one of claims 4-6, wherein the roughened surface (52) of the locking tab (40) is concave.

8. Closing system (14) according to claim 7, wherein the neck (24) of the spout (20) is cylindrical and wherein a radius of curvature of the roughened surface (52) of the locking tab (40), measured in a plane perpendicular to the cap axis (X30), is equal to a radius of the neck (24), measured in a plane perpendicular to the spout axis (X20), to within plus or minus 10%.

9. Closing system (14) according to any one of claims 4-8, wherein the articulation device (44) comprises two flexible arms (46), each flexible arm (46) having a first extremity attached to the support collar (42) and a second extremity attached to the cap cover (32), wherein the articulation device (44) comprises a bridge (49) connecting the second extremities of the two flexible arms (46), wherein the locking tab (40) extends from the skirt (34) towards the bridge (49), wherein the locking tab (40) is not in contact with the bridge (49) in the open configuration of the cap (30) and wherein the closing system (14) is configured so that, during switching of the cap (30) from its closed configuration to its open configuration, the roughened surface (52) of the locking tab (40) comes in contact against the bridge (49) of the articulation device (44) and rubs against the bridge (49).

10. Closing system (14) according to any one of claims 1-9, wherein the spout (20) is manufactured by injection molding in a spout mold and wherein the cap (30) is manufactured by injection molding in a cap mold.

11. Container (10) comprising a reservoir (12) and a closing system (14), the closing system (14) being according to any one of claims 1-10, the base (22) of the spout (20) of the closing system (14) being attached to the reservoir (12).

12. Spout mold, for manufacturing a spout (20) of a closing system (14) according to claim 10, wherein the spout mold comprises a roughened surface (62), configured to form the roughened surface (50) of the neck (24) of the spout (20) during injection molding of the spout (20), wherein the roughened surface (62) of the spout mold has a surface roughness parameter Ra of at least 6.30 µm, as defined by ISO 21920-2:2021 Standard.

13. Spout mold according to claim 12, wherein the roughened surface (62) of the spout mold is manufactured by electrical discharge machining.

14. Cap mold, for manufacturing a cap (30) of a closing system (14) according to claim 10 considered in combination with any one of claims 4-9, wherein the cap mold comprises a roughened surface (68), configured to form the roughened surface (52) of the locking tab (40) of the cap (30) during injection molding of the cap (30), wherein the roughened surface (68) of the cap mold has a surface roughness parameter Ra of at least 6.30 µm, as defined by ISO 21920-2:2021 Standard.

15. Cap mold according to claim 14, wherein the roughened surface (68) of the cap mold is manufactured by electrical discharge machining.
